# EUROPÄISCHE PATENTSCHRIFT

(11) **EP 3 328 716 B1**
(45) Veröffentlichungstag und Bekanntmachung des Hinweises auf die Patenterteilung: **25.11.2020**
(21) Anmeldenummer: 16733066.1
(22) Anmeldetag: 28.06.2016
(51) Int. Cl.: B62D 33/06

(54) **KABINENLAGERUNGSANORDNUNG FÜR EIN NUTZFAHRZEUG**
CAB SUPPORT ARRANGEMENT FOR A UTILITY VEHICLE
ENSEMBLE DE MONTAGE DE CABINE POUR VÉHICULE UTILITAIRE

(30) Priorität: 30.07.2015 DE 102015214456
(43) Veröffentlichungstag der Anmeldung: 06.06.2018
(73) Patentinhaber: ZF Friedrichshafen AG, 88046 Friedrichshafen (DE); Deere & Company, Moline, IL 61265 (US)
(72) Erfinder: HELM, Eike, 49356 Diepholz (DE); EISMANN, Jens, 49326 Melle (DE); GROSSMANN, Stefan, 23619 Zarpen (DE); YOUNG, Donald E., Cedar Falls, Iowa 50613 (US); ROTH, Jonathan, Cedar Falls, Iowa 50613 (US); MANTERNACH, Byron, Hopkinton, Iowa 52237 (US)
(74) Vertreter: ZF Friedrichshafen AG
(86) Internationale Anmeldenummer: PCT/EP2016/064901
(87) Internationale Veröffentlichungsnummer: WO 2017/016774

(56) Entgegenhaltungen:
- EP-A2- 0 943 532
- EP-A2- 1 645 494
- WO-A2-2012/142560
- US-B1- 6 206 121

## Beschreibung

Die Erfindung betrifft eine Kabinenlagerungsanordnung für ein Nutzfahrzeug, mit mehreren sich in oder im Wesentlichen in einer Längsrichtung erstreckenden Längslenkern, mittels welchen eine Fahrerkabine bewegbar an einem Fahrzeugrahmen gelagert ist, wobei zwei der Längslenker in einer quer zur Längsrichtung verlaufenden Querrichtung im Abstand zueinander angeordnet sind, durch eine sich in Querrichtung erstreckende Drehstabfeder miteinander verbunden sind, in einer quer zur Längsrichtung und quer zur Querrichtung verlaufenden Hochrichtung auf gleicher Höhe angeordnet sind und ein erstes Längslenkerpaar bilden.

Eine derartige Kabinenlagerungsanordnung ist aus der EP 1 645 494 A2 bekannt, wobei ein zusätzlicher Längslenker in Querrichtung mittig zwischen und in Hochrichtung über dem ersten Längslenkerpaar angeordnet ist. Diese Lösung ist mit dem Nachteil verbunden, dass bei einer Wankbewegung der Fahrerkabine der zusätzliche Längslenker verzwängt oder tordiert wird. Somit müssen das erste Längslenkerpaar und der zusätzliche Längslenker bezüglich ihrer Federraten aufeinander abgestimmt werden, was in der Praxis jedoch immer mit einem Kompromiss verbunden ist, da auch die Federraten und die Bauteilfestigkeiten aufeinander abgestimmt werden müssen. Nachteilig ist ferner, dass ein Gieren der Fahrerkabine hauptsächlich durch das erste Längslenkerpaar abgefangen werden muss. Dies hat zur Folge, dass die Lager des ersten Längslenkerpaars relativ steif ausgeführt sein müssen, um Gierbewegungen in einem für den Komfort akzeptablen Bereich halten zu können. Dies hat aber wiederum zur Folge, dass die Fahrerkabine bei Anregungen in Längsrichtung aufgrund der steifen Lager mit einer erhöhten Längsstößigkeit reagiert, was einen Komfortnachteil darstellt. Ferner ist bei der Anordnung gemäß der EP 1 645 494 A2 das Problem vorhanden, dass in der Regel vor der Fahrerkabine kein Bauraum zum Anordnen der Längslenker zur Verfügung steht.

Die EP 0 943 532 A2 offenbart eine Aufhängung mit einer an einer Fahrerhaus-Gelenkkonsole an einem Chassis angebrachten, horizontalen Achse zum kippbaren Tragen eines Fahrerhauses, die mittels eines ersten Lenkers mit einem an einer kippbaren Gelenkkonsole am Fahrerhaus angebrachten, horizontalen Stift derart verbunden ist, dass eine ein Zentrum der horizontalen Achse und ein Zentrum des horizontalen Stiftes verbindende Linie zur Rückseite eines Fahrzeuges hin abfallend verläuft, wenn das Fahrerhaus sich in horizontaler Position befindet. Dabei ist der erste Lenker mit seinem einen Ende schwenkbar um die horizontale Achse und mit seinem anderen Ende schwenkbar an der kippbaren Gelenkkonsole gelagert. Ferner ist ein an einer Konsole angebrachter, horizontaler Stift, die an einem rückseitigen Bogen des Chassis angeschlossen ist, mittels eines zweiten Lenkers mit einem an einer Konsole angebrachten, horizontalen Stift, die an einem an einer Rückseite des Fahrerhauses vorgesehenen Stützbalken angeschlossen ist, derart verbunden, dass eine die Zentren dieser horizontalen Stifte verbindende Linie zur Rückseite des Fahrzeuges hin abfallend verläuft, wenn das Fahrerhaus sich in horizontaler Position befindet. Dabei bilden der erste und der zweite Lenker ein Parallelogrammgestänge.

Ausgehend hiervon liegt der Erfindung die Aufgabe zugrunde, eine Kabinenlagerungsanordnung der eingangs genannten Art derart weiterzubilden, dass eine Verzwängung oder Verwindung von Längslenkern und/oder von deren Lagern aufgrund einer Wankbewegung der Fahrerkabine vermieden oder zumindest reduziert werden kann.

Diese Aufgabe wird durch eine Kabinenlagerungsanordnung nach Anspruch 1 gelöst. Bevorzugte Weiterbildungen dieser Kabinenlagerungsanordnung sind in den Unteransprüchen und in der nachfolgenden Beschreibung gegeben.

Die Kabinenlagerungsanordnung für ein Nutzfahrzeug weist mehrere sich in oder im Wesentlichen in einer Längsrichtung erstreckende Längslenker auf, mittels welchen eine Fahrerkabine bewegbar, insbesondere schwenkbar, an einem Fahrzeugrahmen gelagert ist, wobei zwei der Längslenker in einer quer zur Längsrichtung verlaufenden Querrichtung im Abstand zueinander angeordnet sind, in einer quer zur Längsrichtung und quer zur Querrichtung verlaufenden Hochrichtung auf gleicher Höhe angeordnet sind und ein erstes Längslenkerpaar bilden, und wobei zwei andere der Längslenker in Querrichtung im Abstand zueinander angeordnet sind, in Hochrichtung auf gleicher Höhe angeordnet sind und ein zweites Längslenkerpaar bilden, welches in Hochrichtung zu dem ersten Längslenkerpaar einen Abstand aufweist, wobei die beiden Längslenker des ersten Lenkerpaars durch eine sich in Querrichtung erstreckende Drehstabfeder miteinander verbunden sind, deren Enden starr mit den Längslenkern des ersten Längslenkerpaars verbunden sind.

Durch den Einsatz der beiden in Hochrichtung zueinander beabstandeten Längslenkerpaare ist es möglich, aufgrund einer Wankbewegung der Fahrerkabine in die Längslenker eingeleitete Lasten seitlich und nicht mittig abzufangen, sodass eine Verzwängung oder Verwindung der Längslenker vermieden oder zumindest deutlich reduziert werden kann. Die Anzahl der Längslenker beträgt vorzugsweise vier. Ausdrücke wie "vorne" oder wie "hinten" oder dergleichen beziehen sich insbesondere auf die Längsrichtung und/oder auf eine, vorzugsweise in Längsrichtung verlaufende, Fahrtrichtung des oder eines Nutzfahrzeugs. Ausdrücke wie "seitlich" oder dergleichen beziehen sich insbesondere auf die Querrichtung. Ausdrücke wie "oben" oder wie "unten" oder dergleichen beziehen sich insbesondere auf die Hochrichtung. Bevorzugt sind die Längslenker jedes Längslenkerpaars, insbesondere in Längsrichtung und/oder hinsichtlich ihrer Längserstreckung, gleich lang. Vorzugsweise sind die Längslenker des ersten Längslenkerpaars, insbesondere in Längsrichtung und/oder hinsichtlich ihrer Längserstreckung, gleich lang wie die Längslenker des zweiten Längslenkerpaars.

Vorteilhaft bilden die Längslenker jeweils einen langgestreckten Körper. Beispielsweise sind die Längslenker jeweils gerade oder im Wesentlichen gerade ausgebildet. Alternativ ist aber auch ein gekrümmter und/oder gebogener Verlauf der Längslenker möglich, insbesondere wenn der zur Verfügung stehende Bauraum dies erfordert. Vorzugsweise bilden die Längslenker jeweils einen starren Körper. Die Längslenker bestehen bevorzugt jeweils aus Metall, insbesondere aus einem Eisenwerkstoff, wie z.B. Stahl.

Bevorzugt sind die Längslenker jedes Längslenkerpaars gleich oder gleichartig ausgebildet und/oder bezüglich einer in Längsrichtung und in Hochrichtung verlaufenden Längs-Hochebene spiegelsymmetrisch ausgebildet. Die Längslenker zumindest eines oder jedes Längslenkerpaars verlaufen vorzugsweise parallel zueinander und/oder sind vorzugsweise parallel zueinander angeordnet. Alternativ ist es auch möglich, dass die Längslenker zumindest eines oder jedes Längslenkerpaars nicht parallel zueinander verlaufen. Beispielsweise sind die Längslenker zumindest eines oder jedes Längslenkerpaars aufeinander zu geneigt. Ferner verlaufen die in Hochrichtung übereinander angeordneten Längslenker jedes Längslenkerpaars vorzugsweise parallel zueinander. Insbesondere sind die Längslenkerpaare parallel zueinander angeordnet. Vorzugsweise sind die Längslenkerpaare, insbesondere in Hochrichtung, übereinander angeordnet. Bevorzugt ist das erste Längslenkerpaar, insbesondere in Hochrichtung, über dem zweiten Längslenkerpaar angeordnet. Alternativ kann aber auch das zweite Längslenkerpaar, insbesondere in Hochrichtung, über dem ersten Längslenkerpaar angeordnet sein.

Gemäß einer Ausgestaltung sind alle Längslenker oder zumindest die in Hochrichtung übereinander angeordneten Längslenker jedes Längslenkerpaars gleich oder gleichartig ausgebildet. Hierdurch ist eine hohe Anzahl an Gleichteilen erzielbar. Alternativ sind die Längslenker des zweiten Längslenkerpaars schwächer und/oder leichter als die Längslenker des ersten Längslenkerpaars ausgebildet. Hierdurch kann Gewicht eingespart werden. Eine schwächere Ausbildung der Längslenker des zweiten Längslenkerpaars ist möglich, da die Längslenker des ersten Längslenkerpaars aufgrund der Drehstabfeder in der Regel höheren Belastungen ausgesetzt sind als die Längslenker des zweiten Längslenkerpaars. Die Längslenker des zweiten Längslenkerpaars sind insbesondere nicht durch eine Drehstabfeder miteinander verbunden. Vorzugsweise sind die Längslenker des zweiten Längslenkerpaars nicht starr miteinander verbunden.

Die Drehstabfeder ist bevorzugt als Rohr ausgebildet. Insbesondere sind die Enden der Drehstabfeder starr mit den Längslenkern des ersten Längslenkerpaars verbunden, beispielsweise durch Schweiß- oder Pressverbindungen. Vorteilhaft weisen die Enden der Drehstabfeder eine polygonale Umfangskontur auf und sind insbesondere in entsprechend konturierte Aufnahmen der Längslenker des ersten Längslenkerpaars eingesetzt und/oder eingepresst. Alternativ können die Längslenker des ersten Längslenkerpaars aber auch einstückig und/oder materialhomogen mit der Drehstabfeder ausgebildet sein. Die Drehstabfeder besteht bevorzugt aus Metall, insbesondere aus einem Eisenwerkstoff, wie z.B. Stahl.

Gemäß einer Weiterbildung sind die Längslenker des ersten Längslenkerpaars um eine erste Schwenkachse schwenkbar an der Fahrerkabine und um eine zweite Schwenkachse schwenkbar am Fahrzeugrahmen gelagert. Ferner sind die Längslenker des zweiten Längslenkerpaars bevorzugt um eine dritte Schwenkachse schwenkbar an der Fahrerkabine und um eine vierte Schwenkachse schwenkbar am Fahrzeugrahmen gelagert. Vorteilhaft verlaufen die Schwenkachsen jeweils in Querrichtung. Bevorzugt liegen die erste Schwenkachse und die dritte Schwenkachse in einer sich in Querrichtung und in Hochrichtung erstreckenden ersten Ebene. Ferner liegen die zweite Schwenkachse und die vierte Schwenkachse bevorzugt in einer sich in Querrichtung und in Hochrichtung erstreckenden zweiten Ebene. Die zweite Ebene weist in Längsrichtung insbesondere einen Abstand zu der ersten Ebene auf. Vorteilhaft sind die erste Schwenkachse und die dritte Schwenkachse in Hochrichtung übereinander angeordnet. Ferner sind die zweite Schwenkachse und die vierte Schwenkachse vorteilhaft in Hochrichtung übereinander angeordnet. Insbesondere weisen die erste Schwenkachse und die zweite Schwenkachse in Längsrichtung einen Abstand zueinander auf. Ferner weisen die dritte Schwenkachse und die vierte Schwenkachse in Längsrichtung insbesondere einen Abstand zueinander auf.

Gemäß einer Ausgestaltung sind die Längslenker jedes Längslenkerpaars mit einem ersten Ende schwenkbar an der Fahrerkabine und mit einem zweiten Ende schwenkbar an dem Fahrzeugrahmen gelagert. Bevorzugt sind die Längslenker des ersten Längslenkerpaars mit ihrem oder einem ersten Ende, insbesondere um die erste Schwenkachse, schwenkbar an der Fahrerkabine und mit ihrem oder einem zweiten Ende, insbesondere um die zweite Schwenkachse, schwenkbar an dem Fahrzeugrahmen gelagert. Ferner sind die Längslenker des zweiten Längslenkerpaars bevorzugt mit ihrem oder einem ersten Ende, insbesondere um die dritte Schwenkachse, schwenkbar an der Fahrerkabine und mit ihrem oder einem zweiten Ende, insbesondere um die vierte Schwenkachse, schwenkbar an dem Fahrzeugrahmen gelagert. Jeder Längslenker des ersten Längslenkerpaars ist insbesondere zwischen seinen Enden mit der Drehstabfeder starr verbunden. Bevorzugt sind die Längslenker jeweils durch ein Gummilager mit der Fahrerkabine verbunden und/oder an dieser angelenkt. Insbesondere werden diese Gummilager den Längslenkern zugerechnet. Ferner sind die Längslenker bevorzugt jeweils durch ein Gummilager mit dem Fahrzeugrahmen verbunden und/oder an diesem angelenkt. Insbesondere werden diese Gummilager den Längslenkern zugerechnet.

Die Fahrerkabine ist in Hochrichtung vorzugsweise auf und/oder über dem Fahrzeugrahmen angeordnet. Bei dem Fahrzeugrahmen handelt es sich bevorzugt um den Fahrzeugrahmen des oder eines Nutzfahrzeugs. Ferner handelt es sich bei der Fahrerkabine bevorzugt um die Fahrerkabine des oder eines Nutzfahrzeugs. Die Fahrerkabine umfasst z.B. einen Sitz und/oder ein Lenkrad. Das Nutzfahrzeug ist insbesondere ein Kraftfahrzeug. Vorteilhaft handelt es sich bei dem Nutzfahrzeug um ein landwirtschaftliches Nutzfahrzeug. Die Längsrichtung entspricht bevorzugt einer Fahrzeuglängsrichtung des Nutzfahrzeugs. Die Querrichtung entspricht bevorzugt einer Fahrzeugquerrichtung des Nutzfahrzeugs. Die Hochrichtung entspricht bevorzugt einer Fahrzeughochrichtung des Nutzfahrzeugs. Die oder eine Fahrtrichtung und/oder Vorwärtsfahrtrichtung des Nutzfahrzeugs verläuft bevorzugt in Längsrichtung.

Die Längslenkerpaare sind vorzugsweise unter der Fahrerkabine angeordnet. Insbesondere sind die Längslenkerpaare in Hochrichtung zwischen dem Fahrzeugrahmen und den Fahrerkabine angeordnet. Beispielsweise sind die Längslenkerpaare in Fahrtrichtung vorne oder hinten unter der Fahrerkabine angeordnet.

Die Fahrerkabine umfasst bevorzugt zwei in Querrichtung einen Abstand zueinander aufweisende Konsolen, die sich in Hochrichtung insbesondere nach unten von der Fahrerkabine wegerstrecken. Vorzugsweise sind die Längslenker an den Konsolen der Fahrerkabine angelenkt und insbesondere dadurch schwenkbar an der Fahrerkabine gelagert. Ferner umfasst der Fahrzeugrahmen bevorzugt zwei in Querrichtung einen Abstand zueinander aufweisende Konsolen, die sich in Hochrichtung insbesondere nach oben von dem Fahrzeugrahmen wegerstrecken. Vorzugsweise sind die Längslenker an den Konsolen des Fahrzeugrahmens angelenkt und insbesondere dadurch schwenkbar an dem Fahrzeugrahmen gelagert. Vorzugsweise bilden die Konsolen jeweils einen starren Körper. Die Konsolen bestehen bevorzugt jeweils aus Metall, insbesondere aus einem Eisenwerkstoff, wie z.B. Stahl.

Gemäß einer Weiterbildung ist die Fahrerkabine mittels eines, vorzugsweise in oder im Wesentlichen in Querrichtung verlaufenden, Stützglieds, insbesondere in Querrichtung, an dem Fahrzeugrahmen abgestützt. Bevorzugt ist das Stützglied, insbesondere um eine in Längsrichtung verlaufende erste Stützgliedschwenkachse, schwenkbar an dem Fahrzeugrahmen gelagert. Ferner ist das Stützglied, insbesondere um eine in Längsrichtung verlaufende zweite Stützgliedschwenkachse, schwenkbar an der Fahrerkabine gelagert. Die beiden Stützgliedschwenkachsen weisen insbesondere einen Abstand zueinander auf, vorzugsweise in Querrichtung. Bevorzugt ist das Stützglied mit einem Ende, insbesondere um die erste Stützgliedschwenkachse, schwenkbar an dem Fahrzeugrahmen und mit einem anderen Ende, insbesondere um die zweite Stützgliedschwenkachse, schwenkbar an der Fahrerkabine gelagert. Das Stützglied ist z.B. ein Querlenker oder ein Panhardstab. Vorzugsweise weist das Stützglied in Längsrichtung einen Abstand zu der ersten und zu der dritten Schwenkachse und/oder zu den Schwenkachsen auf. Bevorzugt ist das Stützglied durch ein Gummilager mit der Fahrerkabine verbunden und/oder an dieser angelenkt. Insbesondere wird dieses Gummilager dem Stützglied zugerechnet. Ferner ist das Stützglied bevorzugt durch ein Gummilager mit dem Fahrzeugrahmen verbunden und/oder an diesem angelenkt. Insbesondere wird dieses Gummilager dem Stützglied zugerechnet. Beispielsweise ist das Stützglied in Fahrtrichtung hinten oder vorne an der Fahrerkabine angeordnet. Das Stützglied kann insbesondere Kräfte in Querrichtung aufnehmen und/oder übertragen. Bevorzugt wirkt das Stützglied einer Bewegung der Fahrerkabine in Querrichtung relativ zu dem Fahrzeugrahmen entgegen. Insbesondere wirkt das Stützglied einem Drehen der Fahrerkabine um eine in Hochrichtung verlaufende Hochachse entgegen. Das Stützglied ist in Hochrichtung vorzugsweise zwischen dem Fahrzeugrahmen und der Fahrerkabine angeordnet. Beispielsweise ist das Stützglied unter der Fahrerkabine angeordnet.

Vorteilhaft bildet das Stützglied einen langgestreckten Körper. Beispielsweise ist das Stützglied gerade oder im Wesentlichen gerade ausgebildet. Alternativ ist aber auch ein gekrümmter und/oder gebogener Verlauf des Stützglieds möglich, insbesondere wenn der zur Verfügung stehende Bauraum dies erfordert. Vorzugsweise bildet das Stützglied einen starren Körper. Das Stützglied besteht bevorzugt aus Metall, insbesondere aus einem Eisenwerkstoff, wie z.B. Stahl.

Gemäß einer Ausgestaltung ist die Fahrerkabine durch mehrere, vorzugsweise durch wenigstens drei oder durch vier, Federn und/oder Feder-Dämpfervorrichtungen mit dem Fahrzeugrahmen verbunden und/oder auf diesem, vorzugsweise federnd und/oder dämpfend, abgestützt. Insbesondere liegen die Federn und/oder Feder-Dämpfervorrichtungen nicht alle auf einer gemeinsamen Geraden. Bevorzugt sind die Federn und/oder Feder-Dämpfervorrichtungen auf den Ecken eines Dreiecks oder Vierecks angeordnet. Vorteilhaft sind die Federn und/oder Feder-Dämpfervorrichtungen, insbesondere in Hochrichtung, zwischen dem Fahrzeugrahmen und der Fahrerkabine angeordnet. Die Federn sind z.B. jeweils als Schraubenfeder, Blattfeder oder Gasdruckfeder ausgebildet. Unter einer Feder-Dämpfervorrichtung ist insbesondere eine Kombination einer oder wenigstens einer Feder mit einem oder wenigstens einem Dämpfer zu verstehen, wobei die Feder insbesondere eine Schraubenfeder, eine Blattfeder oder eine Gasdruckfeder ist.

Der Fahrzeugrahmen bildet bevorzugt einen starren Körper. Insbesondere besteht der Fahrzeugrahmen aus Metall, vorzugsweise aus einem Eisenwerkstoff, wie z.B. Stahl.

Die Fahrerkabine bildet bevorzugt einen starren Körper. Insbesondere besteht die Fahrerkabine aus Kunststoff, aus Metall oder aus einer Kombination dieser Werkstoffe. Bevorzugt umfasst die Fahrerkabine eine Rahmenstruktur. Die Rahmenstruktur bildet vorzugsweise den tragenden Teil der Fahrerkabine. Bezugnahmen auf die Fahrerkabine sind insbesondere als Bezugnahmen auf die Rahmenstruktur zu verstehen und/oder umgekehrt. Vorteilhaft besteht die Rahmenstruktur aus Metall, vorzugsweise aus einem Eisenwerkstoff, wie z.B. Stahl. Die Rahmenstruktur ist bevorzugt mit Verkleidungsteilen verkleidet. Die Verkleidungsteile bestehen z.B. aus Kunststoff und/oder aus Metall.

Durch die Erfindung ist insbesondere wenigstens einer oder sind die oder mehrere der nachfolgend angegebenen Vorteile erzielbar:
- Eine Bewegung der Kabine in Längsrichtung und/oder ein Schwenken der Kabine um eine in Querrichtung verlaufende Querachse (Nicken) sind durch die vier Längslenker (erstes und zweites Längslenkerpaar), insbesondere in Kombination mit deren Gummilagern, kontrollierbar. Die Gummilager der Längslenker sind in Längsrichtung vorzugsweise weich ausgelegt.
- Eine Bewegung der Fahrerkabine in Querrichtung ist durch die über die Drehstabfeder fest miteinander verbundenen Längslenker (erstes Längslenkerpaar) und/oder durch das Stützglied (z.B. Panhardstab) kontrollierbar.
- Eine rotatorische Bewegung der Kabine um die oder eine in Hochrichtung verlaufende Hochachse (Gieren) ist durch die über die Drehstabfeder fest miteinander verbundenen Längslenker (erstes Längslenkerpaar) und/oder durch das Stützglied (z.B. Panhardstab) kontrollierbar.
- Sind die Gummilager der Längslenker in Längsrichtung weich ausgelegt, kann der Fall eintreten, dass die über die Drehstabfeder fest miteinander verbundenen Längslenker (erstes Längslenkerpaar) eine zu große Drehung der Fahrerkabine um die Hochachse (Gieren) zulassen. Hier greift das Stützglied (z.B. Panhardstab) ein, mittels welchem eine Drehung der Fahrerkabine um die Hochachse, insbesondere auf ein für den Fahrkomfort angenehmes Maß, reduzierbar ist.
- Eine rotatorische Bewegung der Fahrerkabine um eine in Längsrichtung verlaufende Längsachse (Wanken) ist durch die bei dieser Bewegung jeweils belasteten Feder-Dämpfervorrichtungen und/oder durch die über die Drehstabfeder fest miteinander verbundenen Längslenker (erstes Längslenkerpaar) kontrollierbar.

Die Erfindung wird nachfolgend anhand einer bevorzugten Ausführungsform unter Bezugnahme auf die Zeichnung beschrieben. In der Zeichnung zeigen:
- Fig. 1: eine schematische Seitenansicht eines Nutzfahrzeugs mit Fahrerkabine,
- Fig. 2: eine Seitenansicht auf einen Teil eines Fahrzeugrahmens des Nutzfahrzeugs und auf eine Rahmenstruktur der Fahrerkabine, die durch eine Kabinenlagerungsanordnung gemäß einer Ausführungsform an dem Fahrzeugrahmen gelagert ist,
- Fig. 3: eine perspektivische Ansicht eines Teils des Fahrzeugrahmens, der Rahmenstruktur der Fahrerkabine und der Kabinenlagerungsanordnung,
- Fig. 4: eine perspektivische Ansicht der Kabinenlagerungsanordnung, wobei der Fahrzeugrahmen und die Fahrerkabine weggelassen wurden und
- Fig. 5: eine andere perspektivische Ansicht eines Teils des Fahrzeugrahmens, der Rahmenstruktur der Fahrerkabine und der Kabinenlagerungsanordnung.

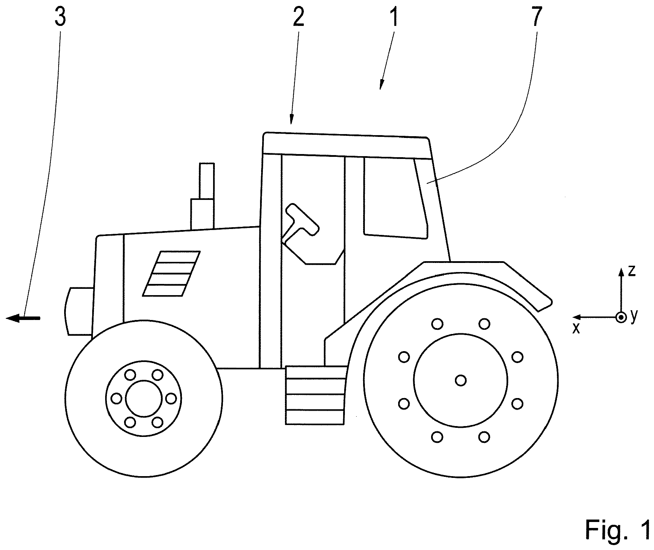

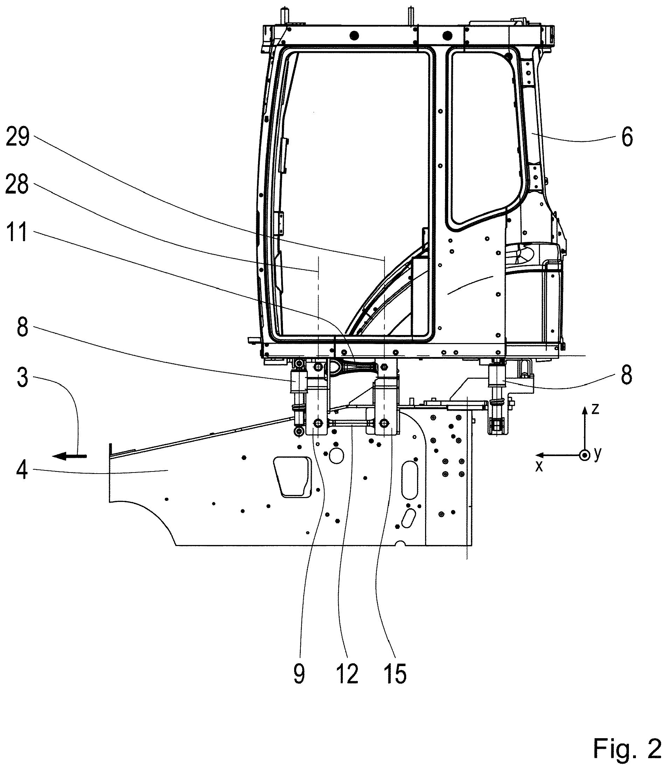

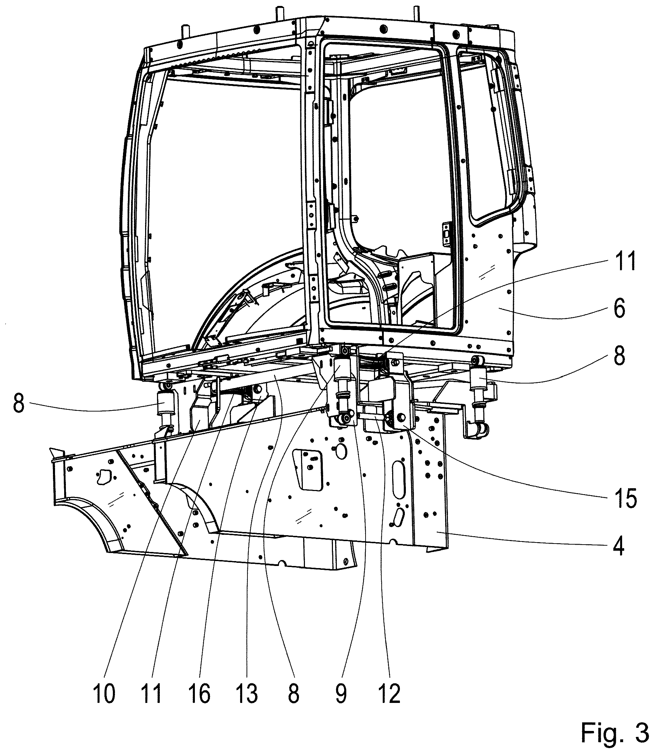

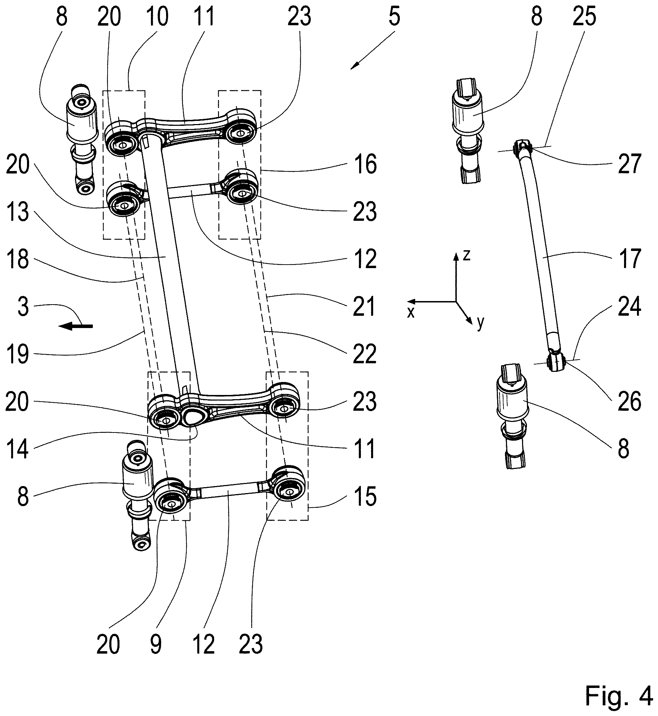

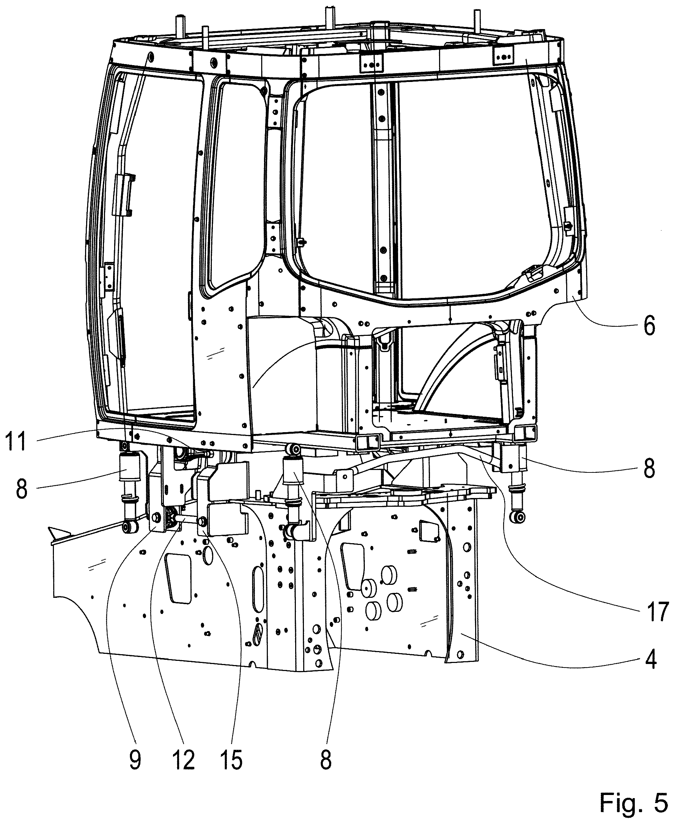

Aus Fig. 1 ist eine Seitenansicht eines Nutzfahrzeugs 1 mit einer Fahrerkabine 2 ersichtlich, welches als Traktor ausgebildet ist. Ferner ist dem Nutzfahrzeug 1 eine gewöhnliche Vorwärtsfahrtrichtung 3 zugeordnet, die in einer Fahrzeuglängsrichtung x des Nutzfahrzeugs verläuft. Ergänzend sind eine senkrecht zur Fahrzeuglängsrichtung x verlaufende Fahrzeugquerrichtung y und eine senkrecht zur Fahrzeuglängsrichtung x und zur Fahrzeugquerrichtung y verlaufende Fahrzeughochrichtung z des Nutzfahrzeugs 1 dargestellt, wobei die Fahrzeugquerrichtung y lediglich angedeutet ist und sich aus der Zeichenebene heraus erstreckt. Das Nutzfahrzeug 1 umfasst einen Fahrzeugrahmen 4, an dem die Fahrerkabine 2 durch eine Kabinenlagerungsanordnung 5 gemäß einer Ausführungsform bewegbar gelagert ist. Ferner umfasst die Fahrerkabine 2 eine Rahmenstruktur 6, die in Fig. 1 durch Verkleidungsteile 7 verdeckt ist. Der Fahrzeugrahmen 4, die Rahmenstruktur 6 und die Kabinenlagerungsanordnung 5 sind in unterschiedlichen Ansichten und Teilansichten aus den Figuren 2 bis 5 ersichtlich. Da die Rahmenstruktur 6 den tragenden Teil der Fahrerkabine 2 bildet, sind Bezugnahmen auf die Rahmenstruktur 6 als Bezugnahmen auf die Fahrerkabine 2 zu verstehen und umgekehrt, sofern nicht ausdrücklich etwas anderes gesagt wird.

Die Rahmenstruktur 6 ist über vier Feder-Dämpfervorrichtungen 8 an dem Fahrzeugrahmen gelagert. Mit der Rahmenstruktur 6 sind zwei in Fahrzeugquerrichtung y im Abstand zueinander angeordnete Konsolen 9 und 10 starr verbunden, an denen jeweils zwei in Fahrzeughochrichtung z untereinander angeordnete Längslenker 11 und 12 mit jeweils einem ihrer Enden um eine in Fahrzeugquerrichtung y verlaufende Schwenkachse 18 bzw. 19 schwenkbar gelagert sind. Die Längslenker 11 und 12 sind dabei über Gummilager 20 an den Konsolen 9 und 10 angelenkt. Ferner liegen die Schwenkachsen 18 und 19 in einer in Fahrzeugquerrichtung y und in Fahrzeughochrichtung z verlaufenden Ebene 28. Die in Fahrzeugquerrichtung y einander gegenüberliegenden Längslenker 11 sind gleichartig ausgebildet und bilden ein erstes Lenkerpaar. Ferner sind die Längslenker 11 des ersten Längslenkerpaars durch eine sich in Fahrzeugquerrichtung y erstreckende Drehstabfeder 13 fest miteinander verbunden. Die Enden der Drehstabfeder 13 weisen jeweils eine polygonale Umfangskontur 14 auf und sind in entsprechend konturierte Aufnahmen der Längslenker 11 eingepresst, sodass die Enden der Drehstabfeder 13 starr mit den Längslenkern 11 verbunden sind. Die in Fahrzeugquerrichtung y einander gegenüberliegenden Längslenker 12 sind ebenfalls gleichartig ausgebildet und bilden ein zweites Lenkerpaar. Die Konsolen 9 und 10 sind in Fahrtrichtung 3 vorne unter der Rahmenstruktur 6 angeordnet und erstrecken sich von dieser aus nach unten.

Mit dem Fahrzeugrahmen 4 sind zwei in Fahrzeugquerrichtung y im Abstand zueinander angeordnete Konsolen 15 und 16 starr verbunden, an denen die Längslenker 11 und 12 mit jeweils einem anderen ihrer Enden um eine in Fahrzeugquerrichtung y verlaufende Schwenkachse 21 bzw. 22 schwenkbar gelagert sind. Die Längslenker 11 und 12 sind dabei über Gummilager 23 an den Konsolen 15 und 16 angelenkt. Ferner liegen die Schwenkachsen 21 und 22 in einer in Fahrzeugquerrichtung y und in Fahrzeughochrichtung z verlaufenden Ebene 29, die zu der Ebene 28 in Längsrichtung x einen Abstand aufweist. Die Konsolen 15 und 16 sind in Fahrtrichtung 3 hinter den Konsolen 9 und 10 angeordnet. Ferner erstrecken sich die Konsolen 15 und 16 von dem Fahrzeugrahmen 4 aus nach oben.

In Fahrtrichtung 3 hinter den Konsolen 9, 10, 15 und 16 ist die Rahmenstruktur 6 über einen in oder im Wesentlichen in Fahrzeugquerrichtung y verlaufenden Panhardstab 17 mit dem Fahrzeugrahmen 4 verbunden. Der Panhardstab 17 ist mit einem seiner Enden um eine in Fahrzeuglängsrichtung x verlaufende Schwenkachse 24 schwenkbar am Fahrzeugrahmen 4 gelagert. Ferner ist der Panhardstab 17 mit einem anderen seiner Enden um eine in Fahrzeuglängsrichtung x verlaufende Schwenkachse 25 schwenkbar an der Rahmenstruktur 6 gelagert. Der Panhardstab 17 ist dabei über ein Gummilager 26 an dem Fahrzeugrahmen 4 und über ein Gummilager 27 an der Rahmenstruktur 6 angelenkt.

### Bezugszeichen

- 1: Nutzfahrzeug
- 2: Fahrerkabine
- 3: Fahrtrichtung
- 4: Fahrzeugrahmen
- 5: Kabinenlagerungsanordnung
- 6: Rahmenstruktur der Fahrerkabine
- 7: Verkleidungsteile der Fahrerkabine
- 8: Feder-Dämpfervorrichtungen
- 9: Konsole
- 10: Konsole
- 11: Längslenker
- 12: Längslenker
- 13: Drehstabfeder
- 14: polygonale Umfangskontur
- 15: Konsole
- 16: Konsole
- 17: Panhardstab
- 18: Schwenkachse
- 19: Schwenkachse
- 20: Gummilager
- 21: Schwenkachse
- 22: Schwenkachse
- 23: Gummilager
- 24: Schwenkachse
- 25: Schwenkachse
- 26: Gummilager
- 27: Gummilager
- 28: Ebene
- 29: Ebene
- x: Fahrzeuglängsrichtung
- y: Fahrzeugquerrichtung
- z: Fahrzeughochrichtung

## Patentansprüche

1. Kabinenlagerungsanordnung für ein Nutzfahrzeug, mit mehreren sich in oder im Wesentlichen in einer Längsrichtung (x) erstreckenden Längslenkern (11, 12), mittels welchen eine Fahrerkabine (2, 6) bewegbar an einem Fahrzeugrahmen (4) gelagert ist, wobei zwei der Längslenker (11) in einer quer zur Längsrichtung (x) verlaufenden Querrichtung (y) im Abstand zueinander angeordnet sind, in einer quer zur Längsrichtung (x) und quer zur Querrichtung (y) verlaufenden Hochrichtung (z) auf gleicher Höhe angeordnet sind und ein erstes Längslenkerpaar bilden, wobei zwei andere der Längslenker (12) in Querrichtung (y) im Abstand zueinander angeordnet sind, in Hochrichtung (z) auf gleicher Höhe angeordnet sind und ein zweites Längslenkerpaar bilden, welches in Hochrichtung (z) zu dem ersten Längslenkerpaar einen Abstand aufweist, **dadurch gekennzeichnet, dass** die beiden Längslenker (11) des ersten Lenkerpaars durch eine sich in Querrichtung (y) erstreckende Drehstabfeder (13) miteinander verbunden sind, deren Enden starr mit den Längslenkern (11) des ersten Längslenkerpaars verbunden sind.

2. Kabinenlagerungsanordnung nach Anspruch 1, **dadurch gekennzeichnet, dass** die Längslenker (11; 12) jedes Längslenkerpaars hinsichtlich ihrer Längserstreckung gleich lang sind.

3. Kabinenlagerungsanordnung nach Anspruch 2, **dadurch gekennzeichnet, dass** die Längslenker (11) des ersten Längslenkerpaars hinsichtlich ihrer Längserstreckung gleich lang wie die Längslenker (12) des zweiten Längslenkerpaars sind.

4. Kabinenlagerungsanordnung nach einem der vorangehenden Ansprüche, **dadurch gekennzeichnet, dass** die Längslenker (11; 12) jedes Längslenkerpaars parallel zueinander angeordnet sind.

5. Kabinenlagerungsanordnung nach einem der vorangehenden Ansprüche, **dadurch gekennzeichnet, dass** die Längslenkerpaare parallel zueinander angeordnet sind.

6. Kabinenlagerungsanordnung nach einem der vorangehenden Ansprüche, **dadurch gekennzeichnet, dass** die Längslenker (11; 12) jedes Längslenkerpaars mit einem ersten Ende schwenkbar an der Fahrerkabine (2, 6) und mit einem zweiten Ende schwenkbar an dem Fahrzeugrahmen (4) gelagert sind.

7. Kabinenlagerungsanordnung nach einem der vorangehenden Ansprüche, **dadurch gekennzeichnet, dass** die Längslenker (11) des ersten Längslenkerpaars um eine in Querrichtung (y) verlaufende erste Schwenkachse (18) schwenkbar an der Fahrerkabine (2, 6) und um eine in Querrichtung (y) verlaufende zweite Schwenkachse (21) schwenkbar am Fahrzeugrahmen (4) gelagert sind, wobei die Längslenker (12) des zweiten Längslenkerpaars um eine in Querrichtung (y) verlaufende dritte Schwenkachse (19) schwenkbar an der Fahrerkabine (2, 6) und um eine in Querrichtung (y) verlaufende vierte Schwenkachse (22) schwenkbar am Fahrzeugrahmen (4) gelagert sind.

8. Kabinenlagerungsanordnung nach Anspruch 7, **dadurch gekennzeichnet, dass** die erste Schwenkachse (18) und die dritte Schwenkachse (19) in einer sich in Querrichtung (y) und in Hochrichtung (z) erstreckenden ersten Ebene (28) liegen, wobei die zweite Schwenkachse (21) und die vierte Schwenkachse (22) in einer sich in Querrichtung (y) und in Hochrichtung (z) erstreckenden zweiten Ebene (29) liegen, die zu der ersten Ebene (28) in Längsrichtung (x) einen Abstand aufweist.

9. Kabinenlagerungsanordnung nach einem der vorangehenden Ansprüche, **dadurch gekennzeichnet, dass** die Fahrerkabine (2, 6) mittels eines Stützglieds (17) in Querrichtung (y) an dem Fahrzeugrahmen (4) abgestützt ist.

10. Kabinenlagerungsanordnung nach Anspruch 9 und nach Anspruch 7 oder 8, **dadurch gekennzeichnet, dass** das Stützglied (17) in Längsrichtung (x) zu der ersten und zu der dritten Schwenkachse (18, 19) einen Abstand aufweist.

11. Kabinenlagerungsanordnung nach Anspruch 9 oder 10, **dadurch gekennzeichnet, dass** das Stützglied (17) um eine in Längsrichtung (x) verlaufende erste Stützgliedschwenkachse (24) schwenkbar an dem Fahrzeugrahmen (4) und um eine in Längsrichtung (x) verlaufende zweite Stützgliedschwenkachse (25) schwenkbar an der Fahrerkabine (2, 6) gelagert ist.

12. Kabinenlagerungsanordnung nach einem der vorangehenden Ansprüche, **dadurch gekennzeichnet, dass** die Fahrerkabine (2, 6) durch vier Feder-Dämpfervorrichtungen (8) auf dem Fahrzeugrahmen (4) abgestützt ist.

13. Kabinenlagerungsanordnung nach Anspruch 6, **dadurch gekennzeichnet, dass** jeder Längslenker (11) des ersten Längslenkerpaars zwischen seinen Enden mit der Drehstabfeder (13) verbunden ist.

## Claims

1. Cab mounting arrangement for a utility vehicle, with a plurality of longitudinal links (11, 12) which extend in or substantially in a longitudinal direction (x) and by means of which a driver's cab (2, 6) is mounted movably on a vehicle frame (4), two of the longitudinal links (11) being arranged at a spacing from one another in a transverse direction (y) which runs transversely with respect to the longitudinal direction (x), being arranged at the same height in a vertical direction (z) which runs transversely with respect to the longitudinal direction (x) and transversely with respect to the transverse direction (y), and forming a first longitudinal link pair, two other ones of the longitudinal links (12) being arranged at a spacing from one another in the transverse direction (y), being arranged at the same height in the vertical direction (z), and forming a second longitudinal link pair which is at a spacing in the vertical direction (z) from the first longitudinal link pair, **characterized in that** the two longitudinal links (11) of the first link pair are connected to one another by way of a torsion bar (13) which extends in the transverse direction (y) and the ends of which are connected rigidly to the longitudinal links (11) of the first longitudinal link pair.

2. Cab mounting arrangement according to Claim 1, **characterized in that** the longitudinal links (11; 12) of each longitudinal link pair are equally long with regard to their longitudinal extent.

3. Cab mounting arrangement according to Claim 2, **characterized in that**, with regard to their longitudinal extent, the longitudinal links (11) of the first longitudinal link pair are as long as the longitudinal links (12) of the second longitudinal link pair.

4. Cab mounting arrangement according to one of the preceding claims, **characterized in that** the longitudinal links (11; 12) of each longitudinal link pair are arranged parallel to one another.

5. Cab mounting arrangement according to one of the preceding claims, **characterized in that** the longitudinal link pairs are arranged parallel to one another.

6. Cab mounting arrangement according to one of the preceding claims, **characterized in that** the longitudinal links (11; 12) of each longitudinal link pair are mounted with a first end pivotably on the driver's cab (2, 6) and with a second end pivotably on the vehicle frame (4).

7. Cab mounting arrangement according to one of the preceding claims, **characterized in that** the longitudinal links (11) of the first longitudinal link pair are mounted on the driver's cab (2, 6) such that they can be pivoted about a first pivot axis (18) which runs in the transverse direction (y), and are mounted on the vehicle frame (4) such that they can be pivoted about a second pivot axis (21) which runs in the transverse direction (y), the longitudinal links (12) of the second longitudinal link pair being mounted on the driver's cab (2, 6) such that it can be pivoted about a third pivot axis (19) which runs in the transverse direction (y), and being mounted on the vehicle frame (4) such that it can be pivoted about a fourth pivot axis (22) which runs in the transverse direction (y).

8. Cab mounting arrangement according to Claim 7, **characterized in that** the first pivot axis (18) and the third pivot axis (19) lie in a first plane (28) which extends in the transverse direction (y) and in the vertical direction (z), the second pivot axis (21) and the fourth pivot axis (22) lying in a second plane (29) which extends in the transverse direction (y) and in the vertical direction (z) and is at a spacing from the first plane (28) in the longitudinal direction (x).

9. Cab mounting arrangement according to one of the preceding claims, **characterized in that** the driver's cab (2, 6) is supported on the vehicle frame (4) in the transverse direction (y) by means of a supporting member (17) .

10. Cab mounting arrangement according to Claim 9 and according to Claim 7 or 8, **characterized in that** the supporting member (17) is at a spacing in the longitudinal direction (x) from the first and from the third pivot axis (18, 19).

11. Cab mounting arrangement according to Claim 9 or 10, **characterized in that** the supporting member (17) is mounted on the vehicle frame (4) such that it can be pivoted about a first supporting member pivot axis (24) which runs in the longitudinal direction (x), and is mounted on the driver's cab (2, 6) such that it can be pivoted about a second supporting member pivot axis (25) which runs in the longitudinal direction (x).

12. Cab mounting arrangement according to one of the preceding claims, **characterized in that** the driver's cab (2, 6) is supported on the vehicle frame (4) by way of four spring damper apparatuses (8).

13. Cab mounting arrangement according to Claim 6, **characterized in that** each longitudinal link (11) of the first longitudinal link pair is connected between its ends to the torsion bar (13).

## Revendications

1. Ensemble de montage de cabine destiné à un véhicule utilitaire, ledit ensemble comprenant une pluralité de bras de suspension longitudinaux (11, 12) s'étendant dans ou sensiblement dans une direction longitudinale (x) et au moyen desquels une cabine de conducteur (2, 6) est montée de manière déplaçable sur un châssis de véhicule (4), deux des bras de suspension longitudinaux (11) étant disposés à distance l'un de l'autre dans une direction transversale (y) qui s'étend transversalement à la direction longitudinale (x) et étant disposés à la même hauteur dans une direction verticale (z) qui s'étend transversalement à la direction longitudinale (x) et transversalement à la direction transversale (y) et formant une première paire de bras de suspension longitudinaux, deux autres des bras de suspension longitudinaux (12) étant disposés à distance l'un de l'autre dans la direction transversale (y), étant disposés à la même hauteur dans la direction verticale (z) et formant une deuxième paire de bras de suspension longitudinaux qui est à une distance de la première paire de bras de suspensions longitudinaux dans la direction verticale (z), **caractérisé en ce que** les deux bras de suspension longitudinaux (11) de la première paire de bras de suspension longitudinaux sont reliés l'un à l'autre par un ressort de barre de torsion (13) qui s'étend dans la direction transversale (y) et dont les extrémités sont reliées rigidement aux bras de suspension longitudinaux (11) de la première paire de bras de suspension longitudinaux.

2. Ensemble de montage de cabine selon la revendication 1, **caractérisé en ce que** les bras de suspension longitudinaux (11 ; 12) de chaque paire de bras de suspension longitudinaux sont de longueur égale dans leur extension longitudinale.

3. Ensemble de montage de cabine selon la revendication 2, **caractérisé en ce que** les bras de suspension longitudinaux (11) de la première paire de bras de suspension longitudinaux sont de même longueur dans leur extension longitudinale que les bras de suspension longitudinaux (12) de la deuxième paire de bras de suspension longitudinaux.

4. Ensemble de montage de cabine selon l'une des revendications précédentes, **caractérisé en ce que** les bras de suspension longitudinaux (11 ; 12) de chaque paire de bras de suspension longitudinaux sont disposés parallèlement les uns aux autres.

5. Ensemble de montage de cabine selon l'une des revendications précédentes, **caractérisé en ce que** les paires de bras de suspension longitudinaux sont disposées parallèlement les unes aux autres.

6. Ensemble de montage de cabine selon l'une des revendications précédentes, **caractérisé en ce que** les bras de suspension longitudinaux (11 ; 12) de chaque paire de bras de suspension longitudinaux sont montés pivotants sur la cabine conducteur (2, 6) à une première extrémité et de manière pivotante sur le châssis de véhicule (4) à une deuxième extrémité.

7. Ensemble de montage de cabine selon l'une des revendications précédentes, **caractérisé en ce que** les bras de suspension longitudinaux (11) de la première paire de bras de suspension longitudinaux sont sur la cabine de conducteur (2, 6) de manière à pouvoir pivoter sur un premier axe de pivotement (18) qui s'étend dans la direction transversale (y) et sur le châssis de véhicule (4) de manière à pouvoir pivoter sur un deuxième axe de pivotement (21) qui s'étend dans la direction transversale (y), les bras de suspension longitudinaux (12) de la deuxième paire de bras de suspension longitudinaux étant montés sur la cabine de conducteur (2, 6) de manière à pouvoir pivoter sur un troisième axe de pivotement (19) qui s'étend dans la direction transversale (y) et sur le châssis de véhicule (4) de manière à pouvoir pivoter sur un quatrième axe de pivotement (22) qui s'étend dans la direction transversale (y).

8. Ensemble de montage de cabine selon la revendication 7, **caractérisé en ce que** le premier axe de pivotement (18) et le troisième axe de pivotement (19) sont situés dans un premier plan (28) qui s'étend dans la direction transversale (y) et dans la direction verticale (z), le deuxième axe de pivotement (21) et le quatrième axe de pivotement (22) étant situés dans un deuxième plan (29) qui s'étend dans la direction transversale (y) et dans la direction verticale (z) et qui est à une distance du premier plan (28) dans la direction longitudinale (x).

9. Ensemble de montage de cabine selon l'une des revendications précédentes, **caractérisé en ce que** la cabine de conducteur (2, 6) est en appui sur le châssis de véhicule (4) dans la direction transversale (y) au moyen d'un élément d'appui (17).

10. Ensemble de montage de cabine selon la revendication 9 et selon la revendication 7 ou 8, **caractérisé en ce que** l'élément d'appui (17) est à une distance du premier et du troisième axe de pivotement (18, 19) dans la direction longitudinale (x).

11. Ensemble de montage de cabine selon la revendication 9 ou 10, **caractérisé en ce que** l'élément d'appui (17) est monté sur le châssis de véhicule (4) de manière à pouvoir pivoter sur un premier axe de pivotement d'élément d'appui (24) qui s'étend dans la direction longitudinale (x) et sur la cabine de conducteur (2, 6) de manière à pouvoir pivoter sur un deuxième axe de pivotement d'élément d'appui (25) qui s'étend dans la direction longitudinale (x).

12. Ensemble de montage de cabine selon l'une des revendications précédentes, **caractérisé en ce que** la cabine de conducteur (2, 6) est en appui sur le châssis de véhicule (4) par le biais de quatre dispositifs amortisseurs à ressort (8).

13. Ensemble de montage de cabine selon la revendication 6, **caractérisé en ce que** chaque bras de suspension longitudinal (11) de la première paire de bras de suspension longitudinaux est relié entre ses extrémités au ressort de barre de torsion (13).
